# EUROPEAN PATENT SPECIFICATION

(11) **EP 3 396 564 B1**
(45) Date of publication and mention of the grant of the patent: **04.08.2021**
(21) Application number: 17167755.2
(22) Date of filing: 24.04.2017
(51) Int. Cl.: G06F 16/90

(54) **SYSTEM STATE ANALYSIS**
SYSTEMZUSTANDSANALYSE
ANALYSE DE L'ÉTAT SYSTÈME

(43) Date of publication of application: 31.10.2018
(73) Proprietor: Nokia Solutions and Networks Oy, 02610 Espoo (FI)
(72) Inventor: SA´AR, Yaniv, 44000 KFAR SABA (IL); ROSENSWEIG, Elisha, 44000 KFAR SABA (IL); SEGALL, Itai, 44000 KFAR SABA (IL)
(74) Representative: MERH-IP Matias Erny Reichl Hoffmann Patentanwälte PartG mbB

(56) References cited:
- US-A1- 2009 319 461
- EMILIO INCERTO ET AL: "Symbolic performance adaptation", SOFTWARE ENGINEERING FOR ADAPTIVE AND SELF-MANAGING SYSTEMS, ACM, 2 PENN PLAZA, SUITE 701 NEW YORK NY 10121-0701 USA, 14 May 2016 (2016-05-14), pages 140-150, XP058258776, DOI: 10.1145/2897053.2897060 ISBN: 978-1-4503-4187-5
- MOHAMMAD GHASEMZADEH ET AL: "K-terminal Network Reliability Evaluation Using Binary Decision Diagram", INFORMATION AND COMMUNICATION TECHNOLOGIES: FROM THEORY TO APPLICATIONS, 2008. ICTTA 2008. 3RD INTERNATIONAL CONFERENCE ON, IEEE, PISCATAWAY, NJ, USA, 7 April 2008 (2008-04-07), pages 1-5, XP031258317, ISBN: 978-1-4244-1751-3
- Anonymous: "Binary decision diagram - Wikipedia", , 26 March 2017 (2017-03-26), XP055714719, Retrieved from the Internet: URL:https://en.wikipedia.org/w/index.php?t itle=Binary_decision_diagram&oldid=7722828 03 [retrieved on 2020-07-14]
- Manoj Singhal ET AL: "Network Reliability Computation by using Different Binary Decision Diagrams", International Journal of Distributed and Parallel Systems (IJDPS), 30 September 2010 (2010-09-30), pages 82-91, XP055714883, DOI: 10.5121/ijdps.2010.1106

## Description

### TECHNICAL FIELD

The present invention relates to the analysis of a system state. In particular, the present invention relates to monitoring physical and/or virtual network elements for determining the state of the system, available and/or unavailable system resources, malfunctions, or alerts.

### BACKGROUND

Incerto et al: "Symbolic Performance Adaptation", 2016 IEEE/ACM 11th International Symposium on Software Engineering for Adaptive and Self-Managing Systems, describe that Quality-of-Service attributes such as performance and reliability heavily depend on the run-time conditions under which software is executed (e.g., workload fluctuation and resources availability). They state that it is important to design systems able to adapt their setting and behavior due to these run-time variabilities. They further propose an approach based on queuing networks as a quantitative model to represent system configurations. To find a model that fits with continuous changes in run-time conditions they employ a combination of symbolic analysis and satisfiability modulo theory (SNIT). Through symbolic analysis all possible system configurations can be as a set of nonlinear real constraints. By formulating an SNIT problem, it is possible to devise system configurations at a small computational cost. Mohammad GHasemzadeh et at: "K-terminal Network Reliability Evaluation Using Binary Decision Diagram", Information and Communication Technologies: From Theory to Applications, 2008, ICTTA 2008, discloses the usage of a Reduced Ordered Binary Decision Diagram in order to encode a relationship between network elements.

In many systems, there is a need to identify sets of elements that satisfy certain properties. Identifying sets of elements may involve maintaining a data structure that contains the relevant data, and invoking algorithms that operate on the data structure to find all sets that satisfy a property of interest. Since such operations may be repeated many times, an efficient implementation may be required.

### SUMMARY

An option for an efficient implementation may involve symbolic representations which allow dealing with large sets of system elements in an efficient way. For example, sets of elements may be represented by characteristic formulae, and queries may be formulated as a symbolic algorithm operating on one or more of the characteristic formulae. Performing the queries may involve manipulations over entire sets of elements, as opposed to "standard" algorithms that explicitly enumerate all system elements involved. The manipulations may be based on constructing a symbolic graph that describes all elements in a system and their relations, and performing a symbolic query on that graph.

Such an implementation may provide a highly expressive and efficient tool for performing queries to analyze or monitor complex systems. For example, in a network function virtualization (NFV) infrastructure management system, complex rules may be supported in a root-cause-analysis feature, which may efficiently scale to very large systems. In particular, such an implementation may have the ability to express complex relations in a way that allows less-trained users to achieve better and more accurate results and an instantaneous reaction. This may be of particular interest in relation to security and performance issues in situations where the state of a system changes fast over time.

The present invention provides:
- a method for analyzing a state of a system according to claim 1;
- a computer-readable medium according to claim 11; and
- a system that implements the method for analyzing the state of the system according to claim 12.

The method comprises formulating a symbolic query using Boolean functions that describe relations between system elements, generating or updating a symbolic representation for each relation by constructing a symbolic graph that describes network elements in the system and relations thereof, and performing the symbolic query on the generated or updated symbolic representation, wherein the query is directed at determining the state of the system, available and/or unavailable system resources, malfunctions, or alerts, wherein the symbolic query returns system elements that satisfy a given condition determined in accordance with the query, and wherein the symbolic graph is constructed by: for each type of system element, defining one or more variables that enumerate system elements of that type, and for each type of relation between the system elements, generating a single symbolic set representing all edges of that type between system elements in the symbolic graph.

In this regard, the term "formulating" as used throughout the specification and claims, in particular refers to combining computer-readable instructions which represent a symbolic query. Furthermore, the term "symbolic representation" as used throughout the specification and claims, in particular refers to a representation which relates to, or operates on system element sets, instead of being dedicated to a single system element. Moreover, the term "Boolean function" as used throughout the specification and claims, in particular refers to a function which evaluates to true or false, e.g., depending on whether system elements have a particular relation.

Thus, instead of computing the query as an explicit iteration over single system elements, the query may be determined or computed by referring to system element sets. This may allow using more efficient techniques in view of query performance. For example, instead of computing a query based on looping over all possible pairs of hosts and routers in a system, the symbolic query may refer to a host set and a router set, which may be represented by symbolic variables. For instance, the host set may be represented by a symbolic variable enumerating all hosts in the host set and the router may be represented by a symbolic variable enumerating all routers in the router set.

A Boolean function may then be used to determine a set of routers and hosts that have a particular relation. For example, the Boolean function may evaluate to true if system elements are connected by a broken link. In this regard, the Boolean function may serve as a symbolic representation of system elements by operating on system element sets and evaluating to true for a symbolic variable which enumerates the system elements which have a particular relation.

Performing the symbolic query may comprise evaluating the Boolean function based on a reduced ordered binary decision diagram, ROBDD, a proposition satisfiability, SAT, solver, or a satisfiability modulo theories, SMT, solver.

This allows efficiently determining an assignment to the symbolic variables for which the Boolean function evaluates to true, by skipping explicit iterations over the system elements, but instead performing the computation on entire sets.

The method may further comprise formulating the symbolic query as a first-order logic formula or algorithm by applying one or more logic operations to the Boolean functions. The one or more operations applied to the Boolean functions may be propositional operators.

Hence, a highly expressive query language may be achieved without degrading query efficiency.

The first-order logic formula may comprise universal and existential quantifications.

This may further improve expressiveness of the query language without degrading query efficiency.

The symbolic query returns system elements that satisfy a given condition. The returned system elements may have a particular property and/or a particular relationship amongst them.

By this, a further improvement of the query language may be achieved, as element properties and/or relationships may be captured.

The symbolic representation may comprise logic operations on one or more of the Boolean functions.

Generating a symbolic representation comprises defining a symbolic variable that enumerates system elements of a same type.

For example, the type may be "host" or "router", wherein the different hosts or routers have unique IDs.

The system may be a computer system and/or a telecommunications network. The system elements may comprise virtual and/or physical entities.

Thus, the method may be applied to analyzing/monitoring large scale physical and/or virtual networks.

The query is directed at determining:
- the state of the system;
- available and/or unavailable system resources;
- malfunctions; or
- alerts.

The method may further comprise reconfiguring the system based on the analyzed state.

For instance, in response to determining unavailability of a system resource or a malfunctioning of the system, a repair operation may be performed. For instance, the repair operation may be directed at making the system resource available.

The method may be implemented by a computer-readable medium, comprising computer-readable instructions, which when carried out by a computer, cause the computer to perform the method.

The system comprises physical and/or virtual network elements and a network monitoring device, the network monitoring device to formulate a symbolic query using one or more Boolean functions that describe relations between the elements, generate or update a symbolic representation for each relation, and perform the symbolic query on the generated or updated symbolic representation, wherein the query is directed at determining the state of the system, available and/or unavailable system resources, malfunctions, or alerts. wherein the symbolic query returns system elements that satisfy a given condition determined in accordance with the query; and wherein the symbolic graph is constructed by: for each type of system element, defining one or more variables that enumerate system elements of that type; and for each type of relation between the system elements, generating a single symbolic set representing all edges of that type between system elements in the symbolic graph. For example, a symbolic query may use many Boolean functions; each representing a different type of relation (all are referred in the query).

By performing the symbolic query, it is possible to determine:
- a state of the system;
- available and/or unavailable system resources;
- malfunctions; or
- alerts.

Implementations of the system may include, but are not limited to, one or more processor, one or more application specific integrated circuit (ASIC) and/or one or more field programmable gate array (FPGA). Implementations of the system may also include using other conventional and/or customized hardware such as software programmable processors.

Moreover, it will be appreciated that method steps and system features may be interchanged in many ways. In particular, the details of the disclosed system can be implemented as a method and vice versa, as the skilled person will appreciate.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Fig. 1 shows a flow chart of a method for analyzing a state of a system;
Fig. 2 shows an additional optional step of the method;
Fig. 3 shows elements of an exemplary system which can be analyzed using the method of Fig. 1; and
Fig. 4 shows a decision diagram relating to the system of Fig. 3.

### DETAILED DESCRIPTION

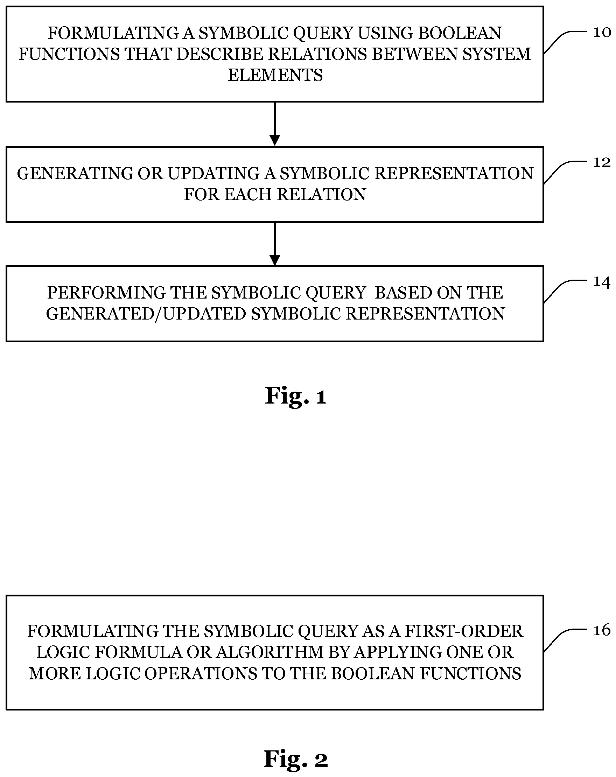

Fig. 1 shows a flow chart of a method for analyzing a state of a system. At 10, the method starts with formulating a symbolic query. The symbolic query may be directed at determining available and/or unavailable system resources, system malfunctions, and/or alerts within a system comprising physical and/or virtual network elements. For example, the system may be cloud-based, wherein system services are implemented by interoperating physical and virtual network elements.

The symbolic query may be formulated by a user of a network monitoring device using a query language. The symbolic query provides Boolean functions that operate on element sets, e.g., system elements of a same type, as opposed to operating on single elements, or pairs of single elements. For instance, a Boolean function may be intended to operate on all system elements of a particular type, wherein the type may indicate a functionality of the element within the system, e.g., host, router, etc.

The Boolean functions may return "true" for elements that are in accordance with a relation that the function is to check. For example, if a Boolean function is directed at determining connected hosts and routers, the Boolean function may receive as input a set of hosts and a set of routers for which it is to be checked whether a (working) connection exists and the symbolic representation of the Boolean function encodes those pairs which are connected. Thus, the Boolean functions and their symbolic representation allow to formulate a query which comprises logic operations on one or more of the Boolean functions and their symbolic representation, which result to true for the elements that are in accordance with the logic operations on the Boolean functions and their symbolic representation.

When formulating the query, the user may select form the available Boolean functions which receive element sets as input, and formulate the symbolic query on basis of one or more selected functions. This avoids the need to explicitly enumerate all possible elements, element pairs, etc. Continuing with the above example, instead of explicitly enumerating pairs of hosts and routers within the query (as would be the case for a query defining on outer and an inner loop which calls a function that checks whether a particular host is connected to a particular router for all hosts and all routers), the query may simply call a Boolean function "host_connected_to_router" which receives as input the sets of hosts and routers that are to be checked.

Hence, from the view of the user, the Boolean functions operate on the element sets which facilitates query formulation, while the evaluation of the Boolean functions can be improved (by a provider of the query language) in terms of efficiency by selecting a suitable strategy for determining elements that are in accordance with the Boolean functions or logic operations on the Boolean functions. In other words, the query language provides Boolean functions which operate on element sets and which can be aggregated in terms of logic expressions or algorithms operating on the Boolean functions, thereby easing query formulation and enhancing query expressiveness.

Once a symbolic query is to be performed, the method continues at 12 with generating or updating a symbolic representation of one or more relations between system elements, in accordance with the one or more Boolean functions selected for the query to be performed. Rather than constructing an explicit enumerated graph of elements, a symbolic graph is constructed as follows:
- For each type of system element, one or more symbolic variables maybe defined that enumerate the elements (i.e. assign an identification, ID).
- For each type of relation between system elements, a single symbolic set may be generated, representing all edges of that type between elements in the graph.

The symbolic query may be performed only once, or the query may also be scheduled for being repeated at a given interval or when a specific condition is met, such as if the system state is expected to have undergone a change. For instance, the query may be repeated (each time) after new system elements have become available, or after system elements have been amended (updated). Hence, instead of discarding the symbolic variables and sets after having performed the symbolic query, the symbolic variables and sets may be stored and updated before the symbolic query is repeated, or after system elements have been amended (updated).

Similarly, the system may be monitored and the symbolic representation of the Boolean functions (and connected queries) that are touched by a change in the system may be dynamically updated to ensure continuous integrity of the symbolic graph. In other words, the network monitoring device may maintain data structures (e.g., one or more symbolic graphs) which allow to quickly evaluate the available Boolean functions from which the user may select to formulate the symbolic query, and monitor the data structures to determine queries whose results change in response to a change within the system.

At 14, the method continues by performing the symbolic query based on the Boolean functions. For example, given a property that depicts a graph characteristic, a symbolic query may be performed that captures all matching instances in the symbolic graph. The symbolic representation of the data structure may thus allow reducing the query to a single symbolic operation. As a consequence, performance (and scalability) may be superior to that of an explicit enumeration.

In other words, the available Boolean functions are mirrored in one or more symbolic graphs. The one or more symbolic graphs can be instantiated, or updated before a function is called. A portion of a symbolic graph relating to a characteristic function may be continuously monitored to allow quickly revealing changes within the system. Usage of the available functions avoids the need for explicit enumerations of elements which ensures a more efficient way of performing the query. This may be particularly efficient if performing a query boils down to traversing an existing (updated) symbolic graph.

According to 16 of Fig. 2, the symbolic query may be generated as a (first-order) logic formula or algorithm by applying one or more (first order) logic operations to the Boolean functions, as will be explained in more detail below.

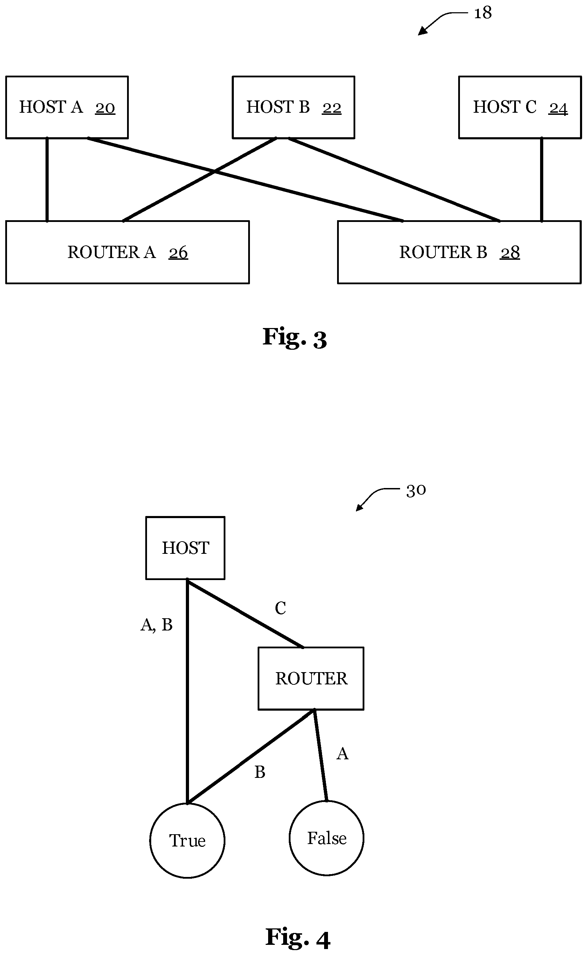

Continuing with the above example, Fig. 3 schematically depicts an exemplary system 18 comprising hosts 20-24 and routers 26, 28 as examples of system elements of two different types. The hosts 20-24 and routers 26, 28 may correspond to physical, virtual or software entities such as resources in a cloud environment. The system elements (or resources) may be represented by a labeled graph G=<V, E> having vertices V and edges E. For instance, the vertices may be marked with types and vertices of the same type may be distinguished by unique IDs. For example, the type may be "host" or "router", and the different hosts and routers may have unique IDs "A", "B", "C".

In this regard, it is to be noted that while the exemplary system 18 of Fig. 3 only contains a small number of entities of two different types, the labeled graph G may also include a large number of entities, wherein the entities may be in no other way limited as in that they are enumerable. Thus, in addition to hardware (HW) appliances such as hosts and routers, the vertices V may also refer to software (SW) objects, commodities, etc.

A property P of the graph may be defined as representing a characteristic of the graph G. For example, *"all hosts are connected to at least one router"* could be a property of the labeled graph G of the system 18. According to the prior art, finding all sub-graphs of G for which the property holds may involve an explicit query over all pairs of hosts 20-24 and routers 26, 28.

However, rather than (or in addition to) constructing an explicit enumerated graph G=<V, E>, a symbolic counterpart G'=<V', E'> may be constructed. The symbolic graph G' may be defined as follows. For each type of element in the labeled graph G, a variable in V' may be defined that enumerates unique IDs of the elements of the respective type. For example, if the explicit enumerated graph G contains the hosts 20-24 and routers 26, 28, "host" and "router" may be different types of resources and the symbolic graph G' may define symbolic variables to represent "host" and "router" that are assigned with unique IDs.

For each type of relation in the explicit enumerated graph G, a symbolic set may be defined that represents all concrete instances where the relation applies. The union of all symbolic sets may be E'. Continuing with the exemplary system 18 of Fig. 3, a single symbolic set may comprise all hosts 20-24 and routers 26, 28 that are connected to each other. Given a property P that may depict a graph characteristic, a symbolic query may be performed that captures all matching instances in the symbolic graph G'. By identifying sets of elements that satisfy certain properties, it may be possible to raise alerts or perform actions on problematic system resources or monitor the system state.

Capturing all matching instances in the symbolic graph G' may be performed using, for example, a proposition satisfiability (SAT) solver, a satisfiability modulo theories, SMT, solver, or a reduced ordered binary decision diagram (ROBDD) as shown in Fig. 4. An instance of a SAT/SMT solver or ROBDD may be considered as a data structure representing a Boolean function, i.e., a function returning "true" or "false". Continuing with the exemplary system 18 of Fig. 3, an instance of a SAT/SMT solver or a ROBDD capturing a function "host_connected_to_router (h, r)" may receive an ID of a host (h), and an ID of a router (r), and return "true" if and only if the respective host is connected to the respective router in the system 18. This function may also be termed a characteristic function, i.e. a function describing an element set.

Therefore, the above example maybe seen as an instance of a SAT/SMT solver or a ROBDD that captures the set of all pairs <host, router> that are connected. As shown in Fig. 4, the characteristic function may evaluate to true if operating on host A 20 or host B 22, irrespective of which router 26 or 28 is concerned and may hence achieve a higher efficiency as compared to a function which iterates over all pairs of hosts 20-24 and routers 26, 28. Moreover, unary Boolean functions may also be represented based on a SAT/SMT solver or a ROBDD.

By using multiple characteristic functions as described in relation to Fig. 4, complex queries may be formulated by applying a series of operations on and between the characteristic functions. For instance, the operations may involve propositional operators ("AND", "OR", "NOT", etc.) and/or universal and existential quantifications ("for all" and "exists"). Nevertheless, the complex queries may be efficiently performed using symbolic representation techniques.

It should be noted that the system features described above correspond to respective method features that may however not explicitly be described, for reasons of conciseness. The disclosure of the present document is however, intended to extend also to such method features.

The functions of the various elements shown in Fig. 1 to Fig. 4, may be provided through the use of dedicated hardware as well as hardware capable of executing software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage.

A person of skill in the art would readily recognize that steps of various above-described methods can be performed by programmed computers. Herein, some embodiments are also intended to cover program storage devices, e.g., digital data storage media, which are machine or computer-readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed method and system. Those skilled in the art will be able to implement various arrangements that, although not explicitly described or shown herein, embody the principles of the invention and are included within the scope of the claims. Furthermore, all examples and embodiment outlined in the present document are principally intended expressly to be only for explanatory purposes to help the reader in understanding the principles of the concept. Furthermore, all statements herein providing principles, aspects, and embodiments of the invention, as well as specific examples thereof, are intended to encompass equivalents thereof.

The present invention maybe embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A method for analyzing a state of a system comprising physical and/or virtual network elements, executed by a network monitoring device, the method comprising:
formulating (10) a symbolic query using Boolean functions that describe relations between elements in the system;
generating (12) or updating a symbolic representation for each relation by constructing a symbolic graph that describes network elements in the system and relations thereof; and
performing (14) the symbolic query on the generated or updated symbolic representation,
wherein the query is directed at determining the state of the system, available and/or unavailable system resources, malfunctions, or alerts
wherein the symbolic query returns elements in the system that satisfy a given condition determined in accordance with the query; and
wherein the symbolic graph is constructed by: for each type of system element, defining one or more variables that enumerate system elements of that type; and for each type of relation between the system elements, generating a single symbolic set representing all edges of that type between system elements in the symbolic graph.

2. The method of claim 1, wherein performing the symbolic query comprises evaluating the Boolean functions based on a reduced ordered binary decision diagram, ROBDD, a proposition satisfiability, SAT, solver, or a satisfiability modulo theories, SMT, solver.

3. The method of claim 1 or 2, comprising
formulating (16) the symbolic query as a first-order logic formula or algorithm by applying one or more logic operations to the Boolean functions.

4. The method of claim 3, wherein the one or more operations applied to the Boolean functions are propositional operators.

5. The method of claim 3 or 4, wherein the first-order logic formula comprises universal and existential quantifications.

6. The method of claim 1, wherein the returned system elements have a particular property and/or a particular relationship amongst them.

7. The method of claim 6, wherein the symbolic representation comprises logic operations on one or more of the Boolean functions.

8. The method of any one of claims 1 to 7, wherein the system is a computer system and/or a telecommunications network.

9. The method of claim 8, wherein the system elements comprise virtual and/or physical entities.

10. The method of any one claims 1 to 9, comprising:
reconfiguring the system based on the analyzed state.

11. A computer-readable medium, comprising computer-readable instructions which, when carried out by a computer cause the computer to perform any of the previous methods.

12. A system, comprising:
physical and/or virtual network elements; and
a network monitoring device, the network monitoring device to:
formulate a symbolic query using Boolean functions that describe relations between the elements;
generate or update a symbolic representation for each relation by constructing a symbolic graph that describes network elements in the system and relations thereof; and
perform the symbolic query on the generated or updated symbolic representation,
wherein the query is directed at determining the state of the system, available and/or unavailable system resources, malfunctions, or alerts;
wherein the symbolic query returns network elements that satisfy a given condition determined in accordance with the query; and
wherein the symbolic graph is constructed by: for each type of network element, defining one or more variables that enumerate network elements of that type; and for each type of relation between the network elements, generating a symbolic set representing all edges of that type between network elements in the symbolic graph.

## Patentansprüche

1. Verfahren zum Analysieren eines Zustands eines Systems, das physische und/oder virtuelle Netzwerkelemente umfasst, die von einer Netzwerküberwachungsvorrichtung ausgeführt werden, wobei das Verfahren Folgendes umfasst:
Formulieren (10) einer symbolischen Abfrage unter Verwendung von booleschen Funktionen, die Beziehungen zwischen Elementen im System beschreiben;
Erzeugen (12) oder Aktualisieren einer symbolischen Repräsentation für jede Beziehung durch Konstruieren eines symbolischen Graphen, der Netzwerkelemente im System und Beziehungen davon beschreibt; und
Durchführen (14) der symbolischen Abfrage zur erzeugten oder aktualisierten symbolischen Repräsentation,
wobei die Abfrage auf das Bestimmen des Zustands des Systems, von verfügbaren und/oder nicht verfügbaren Systemressourcen, Fehlfunktionen oder Alarmen abzielt
wobei die symbolische Abfrage Elemente im System zurückgibt, die eine gegebene Bedingung erfüllen, die gemäß der Abfrage bestimmt wird; und
wobei der symbolische Graph durch Folgendes konstruiert wird: für jeden Typ von Systemelement Definieren von einer oder mehreren Variablen, die die Systemelemente dieses Typs aufzählen; und für jeden Typ von Beziehung zwischen den Systemelementen Erzeugen eines einzelnen symbolischen Satzes, der alle Kanten dieses Typs zwischen Systemelementen im symbolischen Graphen repräsentiert.

2. Verfahren nach Anspruch 1, wobei das Durchführen der symbolischen Abfrage das Beurteilen der booleschen Funktionen auf Basis eines reduzierten geordneten binären Entscheidungsdiagramms, ROBDD, eines Aussagenerfüllbarkeits(SAT)-Lösers oder eines Erfüllbarkeits-Modulo-Theorie(SMT)-Lösers umfasst.

3. Verfahren nach Anspruch 1 oder 2, das Folgendes umfasst
Formulieren (16) der symbolischen Abfrage als eine Formel oder ein Algorithmus einer Logik erster Stufe durch Anwenden von einer oder mehreren Logikoperationen auf die booleschen Funktionen.

4. Verfahren nach Anspruch 3, wobei die eine oder die mehreren Operationen, die auf die booleschen Funktionen angewendet werden, Aussagenoperatoren sind.

5. Verfahren nach Anspruch 3 oder 4, wobei die Formel der Logik erster Stufe universelle und existenzielle Quantifizierungen umfasst.

6. Verfahren nach Anspruch 1, wobei bei den zurückgegebenen Systemelementen eine spezielle Eigenschaft und/oder eine spezielle Beziehung besteht.

7. Verfahren nach Anspruch 6, wobei die symbolische Repräsentation Logikoperationen von einer oder mehreren der booleschen Funktionen umfasst.

8. Verfahren nach einem der Ansprüche 1 bis 7, wobei das System ein Computersystem und/oder ein Telekommunikationsnetzwerk ist.

9. Verfahren nach Anspruch 8, wobei die Systemelemente virtuelle und/oder physische Entitäten umfassen.

10. Verfahren nach einem der Ansprüche 1 bis 9, das Folgendes umfasst:
Neuauslegen des Systems auf Basis des analysierten Zustands.

11. Computerlesbares Medium, das computerlesbare Anweisungen umfasst, die, wenn sie von einem Computer umgesetzt werden, den Computer veranlassen, eines der vorhergehenden Verfahren durchzuführen.

12. System, das Folgendes umfasst:
physische und/oder virtuelle Netzwerkelemente; und
eine Netzwerküberwachungsvorrichtung, wobei die Netzwerküberwachungsvorrichtung zu Folgendem ausgelegt ist:
Formulieren einer symbolischen Abfrage unter Verwendung von booleschen Funktionen, die Beziehungen zwischen den Elementen beschreiben;
Erzeugen oder Aktualisieren einer symbolischen Repräsentation für jede Beziehung durch Konstruieren eines symbolischen Graphen, der Netzwerkelemente im System und Beziehungen davon beschreibt; und
Durchführen der symbolischen Abfrage zur erzeugten oder aktualisierten symbolischen Repräsentation,
wobei die Abfrage auf das Bestimmen des Zustands des Systems, von verfügbaren und/oder nicht verfügbaren Systemressourcen, Fehlfunktionen oder Alarmen abzielt;
wobei die symbolische Abfrage Netzwerkelemente zurückgibt, die eine gegebene Bedingung erfüllen, die gemäß der Abfrage bestimmt wird; und
wobei der symbolische Graph durch Folgendes konstruiert wird: für jeden Typ von Netzwerkelement Definieren von einer oder mehreren Variablen, die die Netzwerkelemente dieses Typs aufzählen; und für jeden Typ von Beziehung zwischen den Netzwerkelementen Erzeugen eines symbolischen Satzes, der alle Kanten dieses Typs zwischen Netzwerkelementen im symbolischen Graphen repräsentiert.

## Revendications

1. Procédé pour l'analyse d'un état d'un système comprenant des éléments de réseau physiques et/ou virtuels, exécuté par un dispositif de surveillance de réseau, le procédé comprenant :
la formulation (10) d'une interrogation symbolique à l'aide de fonctions booléennes qui décrivent des relations entre éléments dans le système ;
la génération (12) ou la mise à jour d'une représentation symbolique pour chaque relation par la construction d'un graphique symbolique qui décrit des éléments de réseau dans le système et leurs relations ; et
la réalisation (14) de l'interrogation symbolique sur la représentation symbolique générée ou mise à jour,
dans lequel l'interrogation vise à déterminer l'état du système, des ressources de système disponibles et/ou indisponibles, des dysfonctionnements ou des alertes
dans lequel l'interrogation symbolique renvoie des éléments dans le système qui satisfont à une condition donnée déterminée conformément à l'interrogation ; et
dans lequel le graphique symbolique est construit par :
pour chaque type d'élément de système, la définition d'une ou de plusieurs variables qui énumèrent des éléments de système de ce type ; et pour chaque type de relation entre les éléments de système, la génération d'un ensemble symbolique unique représentant tous les bords de ce type entre éléments de système dans le graphique symbolique.

2. Procédé selon la revendication 1, dans lequel la réalisation de l'interrogation symbolique comprend l'évaluation des fonctions booléennes sur la base d'un diagramme de décision binaire ordonné réduit, ROBDD, d'un résolveur de satisfiabilité de proposition, SAT, ou d'un résolveur de théories de modulo de satisfiabilité, SMT.

3. Procédé selon la revendication 1 ou 2, comprenant
la formulation (16) de l'interrogation symbolique sous la forme d'une formule ou d'un algorithme logique de premier ordre par l'application d'une ou de plusieurs opérations logiques aux fonctions booléennes.

4. Procédé selon la revendication 3, dans lequel les une ou plusieurs opérations appliquées aux fonctions booléennes sont des opérateurs propositionnels.

5. Procédé selon la revendication 3 ou 4, dans lequel la formule logique de premier ordre comprend des quantifications universelles et existentielles.

6. Procédé selon la revendication 1, dans lequel les éléments de système renvoyés possèdent une propriété particulière et/ou une relation particulière entre eux.

7. Procédé selon la revendication 6, dans lequel la représentation symbolique comprend des opérations logiques sur l'une ou plusieurs des fonctions booléennes.

8. Procédé selon l'une quelconque des revendications 1 à 7, dans lequel le système est un système d'ordinateur et/ou un réseau de télécommunications.

9. Procédé selon la revendication 8, dans lequel les éléments de système comprennent des entités virtuelles et/ou physiques.

10. Procédé selon l'une quelconque des revendications 1 à 9, comprenant :
la reconfiguration du système sur la base de l'état analysé.

11. Support lisible par ordinateur, comprenant des instructions lisibles par ordinateur qui, lors de leur mise en œuvre par un ordinateur, amènent l'ordinateur à réaliser l'un quelconque des procédés qui précèdent.

12. Système, comprenant :
des éléments de réseau physiques et/ou virtuels ; et
un dispositif de surveillance de réseau, le dispositif de surveillance de réseau permettant de :
formuler une interrogation symbolique à l'aide de fonctions booléennes qui décrivent des relations entre les éléments ;
générer ou mettre à jour une représentation symbolique pour chaque relation par la construction d'un graphique symbolique qui décrit des éléments de réseau dans le système et leurs relations ; et
réaliser l'interrogation symbolique sur la représentation symbolique générée ou mise à jour,
dans lequel l'interrogation vise à déterminer l'état du système, des ressources de système disponibles et/ou indisponibles, des dysfonctionnements ou des alertes ;
dans lequel l'interrogation symbolique renvoie des éléments de réseau qui satisfont à une condition donnée déterminée conformément à l'interrogation ; et
dans lequel le graphique symbolique est construit par : pour chaque type d'élément de réseau, la définition d'une ou de plusieurs variables qui énumèrent des éléments de réseau de ce type ; et pour chaque type de relation entre les éléments de réseau, la génération d'un ensemble symbolique représentant tous les bords de ce type entre éléments de réseau dans le graphique symbolique.
